# FASCICULE DE BREVET EUROPEEN

(11) **EP 0 556 091 B1**
(45) Date de publication et mention de la délivrance du brevet: **03.04.1996**
(21) Numéro de dépôt: 93400271.8
(22) Date de dépôt: 03.02.1993
(51) Int. Cl.: B60H 1/00, F04D 27/02, F04D 29/42

(54) **Dispositif de ventilation de l'habitacle d'un véhicule automobile**
Vorrichtung zur Belüftung des Fahrgastraums eines Kraftfahrzeugs
Ventilating device for a motor vehicle interior

(30) Priorité: 11.02.1992 FR 9201517
(43) Date de publication de la demande: 18.08.1993
(73) Titulaire: Valeo Climatisation, F-78321 La Verrière (FR)
(72) Inventeur: Dauvergne, Jean, F-95470 Fosses (FR)
(74) Mandataire: Gamonal, Didier

(56) Documents cités:
- EP-A- 0 467 751
- EP-A- 0 497 639
- DE-A- 3 912 013
- GB-A- 704 319
- GB-A- 2 052 728
- US-A- 3 391 628
- US-A- 4 779 672

## Description

L'invention se rapporte à un dispositif de ventilation de l'habitacle d'un véhicule automobile.

Elle concerne plus particulièrement un dispositif de ventilation du type comprenant un boîtier muni d'une entrée d'air extérieur, d'une entrée d'air recyclé et d'une sortie débouchant dans l'habitacle, un ventilateur logé dans le boîtier, un volet de réglage asservi à la vitesse du véhicule pour fermer partiellement l'entrée d'air extérieur, et des moyens de distribution pour fermer sélectivement l'entrée d'air extérieur et l'entrée d'air recyclé.

Dans les dispositifs connus de ce type, l'entrée d'air extérieur et l'entrée d'air recyclé font admettre dans le boîtier de l'air provenant respectivement de l'extérieur de l'habitacle et de l'intérieur de l'habitacle. L'air admis dans le boîtier est refoulé dans l'habitacle au travers de la sortie du boîtier et sous l'action du ventilateur. Un tel dispositif est connu par exemple par EP-A-0 497 639.

La sortie du boîtier est le plus souvent raccordée à l'entrée d'un appareil de chauffage et/ou de conditionnement pour traiter l'air avant de le refouler dans l'habitacle.

Le volet de réglage asservi à la vitesse du véhicule permet de fermer partiellement et de façon réglable l'entrée d'air extérieur pour stabiliser le débit d'air qui circule dans l'habitacle, et ce quelle que soit la vitesse du véhicule.

On évite ainsi que les conditions de fonctionnement du ventilateur soient perturbées par le régime de pression et de dépression aérodynamique qui s'établit autour du véhicule et qui est fonction de sa vitesse.

Dans les dispositifs connus, le volet de réglage est piloté par une motorisation asservie à la vitesse du véhicule pour fermer plus ou moins l'entrée d'air extérieur, sans toutefois aller jusqu'à sa fermeture complète, laquelle n'est assurée que par les moyens de distribution.

Jusqu'à présent, ces moyens de distribution étaient constitués par un volet de distribution, généralement du type pivotant, propre à fermer sélectivement l'entrée d'air extérieur et l'entrée d'air recyclé. Dans le premier cas, l'entrée d'air recyclé est ouverte et le dispositif fonctionne dans un régime dit de "ventilation recyclée" tandis que, dans le second cas, l'entrée d'air extérieur est ouverte et le dispositif fonctionne dans un régime dit de "ventilation extérieure".

Ces dispositifs connus ont pour inconvénient majeur de nécessiter deux volets distincts, à savoir un volet de réglage de débit et un volet de distribution, ce qui pose des problèmes d'encombrement et de complexité de commande.

L'invention a notamment pour but de remédier à ces inconvénients.

Elle propose, à cet effet, un dispositif de ventilation du type défini en introduction, dans lequel le volet de réglage est propre à prendre une position de fermeture complète de l'entrée d'air extérieur, et dans lequel l'entrée d'air recyclé est équipée d'une grille munie de clapets sensibles à la différence de pression, de sorte que ces clapets s'ouvrent lorsque la pression d'air du côté du boîtier est inférieure à la pression d'air du côté de l'habitacle et que le volet de réglage est en position de fermeture complète.

L'invention permet ainsi avec un seul volet, c'est-à-dire le volet de réglage asservi équipant l'entrée d'air extérieur, de régler le débit d'air dans l'habitacle et de sélectionner le régime de fonctionnement.

Il n'est donc pas nécessaire d'avoir un second volet pour sélectionner le régime de fonctionnement, comme c'était le cas dans la technique antérieure. La grille à clapet équipant l'entrée d'air recyclé fonctionne automatiquement sans nécessiter de moyens positifs de commande et est en outre beaucoup moins encombrante qu'un volet pivotant.

Dans une forme de réalisation préférée de l'invention, la grille équipant l'entrée d'air recyclé comporte une multiplicité de clapets constitués chacun d'une lame souple possédant un bord libre fixé à la grille et un bord libre opposé rappelés élastiquement vers un premier appui définissant une position de fermeture et susceptibles de se déplacer vers un second appui définissant une position d'ouverture.

Selon une autre caractéristique de l'invention, chaque clapet est dirigé vers l'intérieur du boîtier lorsqu'il se trouve dans sa position d'ouverture.

Avantageusement, chaque clapet est formé d'une lame en élastomère armé.

De façon avantageuse, le volet de réglage est un volet pivotant déplaçable entre une position de pleine ouverture et une position de pleine fermeture par rotation d'environ 1/4 de tour.

Selon une autre caractéristique de l'invention, le dispositif comprend des moyens de commande du volet de réglage, une première entrée pour un signal représentatif de la vitesse du véhicule, une seconde entrée pour un signal de consigne de recyclage, et des moyens de traitement propres à recevoir le signal issu de la première entrée ou le signal issu de la seconde entrée et à émettre un signal de sortie appliqué aux moyens de commande du volet, de telle sorte que le signal de sortie soit fonction de la vitesse du véhicule dans le cas où la seconde entrée ne reçoit pas de signal de consigne de recyclage et que le signal de sortie commande le volet en position de fermeture dans le cas où la seconde entrée reçoit un signal de consigne de recyclage.

Avantageusement, les moyens de commande du volet comprennent des moyens d'asservissement linéaire.

Selon une autre caractéristique de l'invention, le boîtier comprend un premier élément de boîtier muni de l'entrée d'air extérieur et de l'entrée d'air recyclé et un second élément de boîtier relié au premier élément, ce second élément de boîtier étant muni de la sortie d'air et logeant le ventilateur.

Dans la description qui suit, faite seulement à titre d'exemple, on se réfère aux dessins annexés, sur lesquels :
- la figure 1 est une vue en coupe d'un dispositif de ventilation selon l'invention, le plan de coupe passant par l'axe du ventilateur et étant perpendiculaire à l'axe de pivotement du volet de réglage;
- la figure 2 est une vue en coupe d'une grille à clapets propre à équiper l'entrée d'air recyclé du dispositif de la figure 1;
- les figures 3 et 4 sont des vues partielles de la figure 1 montrant le volet de réglage dans deux positions différentes; et
- la figure 5 représente schématiquement les moyens de commande du volet de réglage.

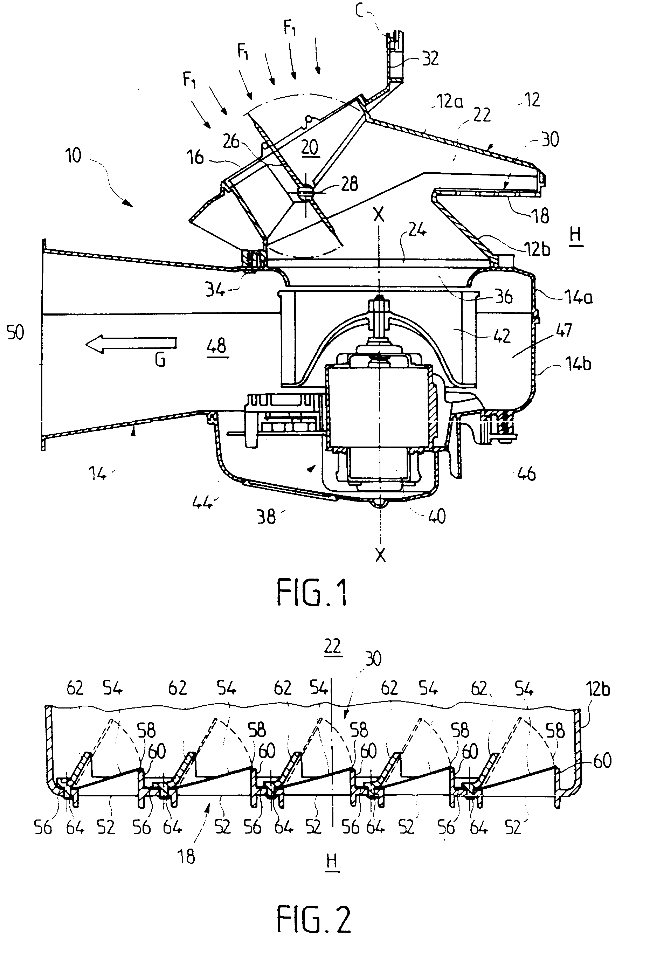

Le dispositif de ventilation de l'habitacle d'un véhicule automobile, tel que représenté à la figure 1, comprend un boîtier 10 formé d'un premier élément de boîtier 12 et d'un second élément de boîtier 14 assemblés entre eux.

Le premier élément de boîtier 12 est formé lui-même de deux parties 12a et 12b assemblées entre elles.

L'élément de boîtier 12 est équipé d'une entrée d'air extérieur 16 formée dans la partie 12a et propre à faire admettre de l'air provenant de l'extérieur de l'habitacle H du véhicule automobile. L'élément de boîtier 12 est équipé en outre d'une entrée d'air recyclé 18, formée dans la partie 12b de l'élément de boîtier 12, et propre à faire admettre de l'air recyclé provenant de l'intérieur de l'habitacle H.

Les entrées 16 et 18 débouchent respectivement sur des conduits 20 et 22 formés à l'intérieur de l'élément de boîtier 12 et aboutissant à un conduit de sortie commun 24 qui communique avec l'élément de boîtier 14.

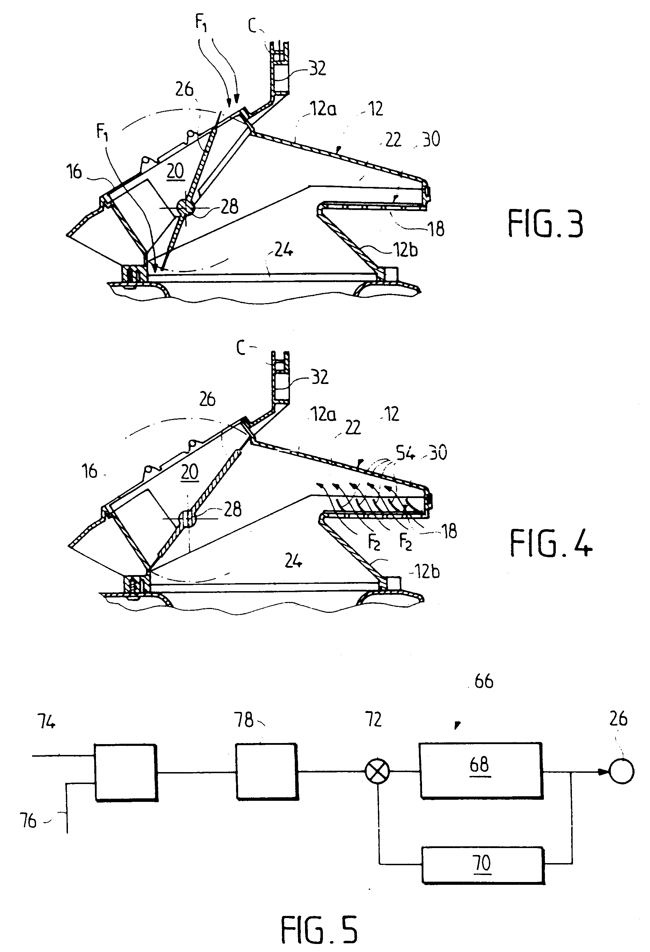

L'entrée d'air extérieur 16 est munie d'un volet de réglage 26 monté pivotant autour d'un axe 28 (perpendiculaire au plan du dessin de la figure 1) et propre à pivoter entre une position de pleine ouverture (figure 1) et une position de pleine fermeture (figure 4) par rotation d'environ 1/4 de tour.

L'entrée d'air 18 est équipée d'une grille à clapets 30 qui sera décrite en détail plus loin et qui est en position de fermeture dans le cas de la figure 1.

L'élément de boîtier 12 comprend une patte de fixation 32 qui dépend de la partie 12a et qui est destinée à être fixée sur un élément de carrosserie C du véhicule automobile.

L'élément de boîtier 14 est formé de deux parties 14a et 14b assemblées entre elles. La partie 14a est fixée à la partie 12b de l'élément de boîtier 12 par l'intermédiaire de vis 34. La partie 14b ménage une ouverture d'entrée 36 qui communique directement avec le conduit de sortie 24 de l'élément de boîtier 12. L'ouverture 36 possède une forme générale circulaire centrée autour d'un axe XX qui s'étend sensiblement orthogonalement à l'axe de rotation 28 du volet 26.

L'élément de boîtier 14 loge intérieurement un groupe moto-ventilateur 38 comprenant un moteur électrique 40 entraînant une turbine 42 disposée adjacente à l'ouverture 36 et tournant autour de l'axe XX. Le moteur 40 est porté par un support 44 qui est fixé à la partie 14b par des vis 46. L'élément de boîtier 14 définit intérieurement une volute 47 communiquant avec un conduit de refoulement 48 aboutissant à une sortie d'air 50 débouchant dans l'habitacle H par l'intermédiaire d'un dispositif de traitement d'air (non représenté).

L'air admis à l'intérieur du boîtier par l'entrée 16 ou l'entrée 14 peut être ainsi refoulé dans l'habitacle au travers de la sortie 50.

Comme montré plus particulièrement à la figure 2, la grille 30 formée dans la partie 12b délimite une multiplicité d'ouvertures 52 de forme générale rectangulaire dont chacune est contrôlée par un clapet 54.

Dans l'exemple, chacun des clapets 54 est formé d'une lame souple de forme générale rectangulaire adaptée à celle de l'ouverture 52 correspondante. Chaque lame possède un bord 56 fixé à la grille 30 et un bord libre opposé 58. Ce dernier est rappelé élastiquement vers un premier appui périphérique 60 définissant une position de fermeture de la lame et susceptible de se déplacer vers un second appui 62 définissant une position d'ouverture de la lame.

Chaque clapet 54 est dans sa configuration au repos (représentée en trait plein) rappelé élastiquement en direction du premier appui 60 correspondant pour fermer l'ouverture 52.

Si la pression régnant dans le boîtier, c'est-à-dire du côté du conduit 22, devient plus faible que la pression régnant du côté de l'habitacle, les clapets 54 ont tendance à s'ouvrir vers la position d'ouverture (représentée en trait interrompu) dans laquelle chaque clapet va en direction du second appui 62. Ainsi, de l'air provenant de l'habitacle H peut pénétrer à l'intérieur du boîtier via l'entrée 30 et le conduit 22.

On remarquera sur la figure 2 que, dans la position d'ouverture de chaque clapet, celui-ci est dirigé vers l'intérieur du boîtier 10.

Dans une forme de réalisation préférée de l'invention, chaque clapet est formé d'une lame en élastomère armé pour lui conférer des propriétés appropriées d'élasticité et de souplesse.

Comme indiqué précédemment, le volet 26 peut pivoter entre une position de pleine ouverture (figure 1) et une position de pleine fermeture (figure 4) en adoptant toute position intermédiaire voulue, par exemple celle représentée à la figure 3.

Le dispositif de ventilation de l'invention peut fonctionner suivant deux régimes différents : un régime dit de "ventilation recyclée" dans lequel le volet de réglage 26 est en position de fermeture complète et les clapets 54 peuvent s'ouvrir (figure 4) et un régime dit de "ventilation extérieure" dans lequel le volet de réglage 26 est en position d'ouverture, pleine (figure 1) ou partielle (figure 3), et les clapets 54 sont en position fermée.

On se réfère maintenant à la figure 5 pour décrire les organes de commande du volet de réglage 26.

Le volet de réglage 26 est piloté par des moyens de commande désignés dans leur ensemble par la référence 66. Dans l'exemple, ces moyens 66 sont des moyens d'asservissement linéaire d'un type en soi connu. Ils comprennent un actionneur 68 associé à un organe 70 de recopie de position et relié à un organe 72 mesurant l'écartement entre une valeur de consigne et une valeur réelle pour ramener cette dernière valeur vers la valeur de consigne imposée.

Le dispositif de l'invention comprend en outre une première entrée 74 pour un signal représentatif de la vitesse du véhicule, une seconde entrée 76 pour un signal de consigne de recyclage et des moyens de traitement 78 propres à recevoir le signal issu de la première entrée 76 ou de la seconde entrée 78 et à émettre un signal de sortie appliqué à l'organe 72. Les moyens 78 fonctionnent de telle sorte que ce signal de sortie soit fonction de la vitesse du véhicule dans le cas où la seconde entrée 76 ne reçoit pas de signal de consigne et que ce signal de sortie commande le volet en position de fermeture dans le cas où la seconde entrée reçoit un signal de consigne de recyclage.

Le dispositif de l'invention fonctionne de la façon suivante.

En régime de ventilation extérieure, le dispositif de traitement 78 reçoit un signal d'entrée représentatif de la vitesse du véhicule et il traite ce signal en fonction d'une loi mathématique bien définie pour donner au volet de réglage 26 une position d'ouverture pleine ou partielle permettant d'ajuster le débit d'air entrant par l'entrée 16 et circulant dans l'habitacle, et cela en fonction de la vitesse automobile du véhicule.

La loi dont se sert l'organe 78 est définie au préalable en fonction des caractéristiques propres du véhicule pour que les conditions de fonctionnement du ventilateur soient sensiblement les mêmes, quel que soit le régime de pression et de dépression aérodynamique, fonction de la vitesse, qui s'établit autour du véhicule.

Dans ce régime de ventilation extérieure, les clapets 54 se ferment naturellement du fait que la pression régnant dans le boîtier en aval de la grille 30, est supérieure à la pression régnant dans l'habitacle.

Dans la position de pleine ouverture représentée à la figure 1, le débit d'air pénétrant par l'ouverture 16 est maximal, comme représenté par les flèches F1, l'air extérieur pénétrant dans le boîtier est ensuite refoulé dans la conduite 48 pour pénétrer dans l'habitacle du véhicule. Sur la sortie 50 est généralement fixé un dispositif de chauffage et/ou de conditionnement pour traiter l'air avant qu'il pénètre dans l'habitacle.

Dans le régime de ventilation recyclée, l'organe 78 (figure 5) reçoit une consigne de recyclage par l'entrée 76 et court-circuite ainsi la loi mathématique définie par l'organe 78. Le volet 26 est automatiquement déplacé vers sa position de pleine fermeture (figure 4) par l'actionneur 68.

Dans ce régime, dès que la pression régnant dans le boîtier devient inférieure à la pression régnant dans l'habitacle, les clapets 54 s'ouvrent automatiquement pour admettre de l'air comme représenté par les flèches F2 sur la figure 4.

Grâce au dispositif de l'invention, il n'est plus nécessaire de prévoir un volet de distribution propre à obturer sélectivement l'entrée d'air extérieur ou l'entrée d'air recyclé, comme c'était le cas avec les dispositifs antérieurs.

## Revendications

1. Dispositif de ventilation de l'habitacle d'un véhicule automobile, comprenant un boîtier (10) muni d'une entrée d'air extérieur (16), d'une entrée d'air recyclé (18) et d'une sortie d'air (50) débouchant dans l'habitacle (H), un ventilateur (38) logé dans le boîtier, un volet de réglage (26) asservi à la vitesse du véhicule pour obturer partiellement l'entrée d'air extérieur (16), et des moyens de distribution pour obturer sélectivement l'entrée d'air extérieur et l'entrée d'air recyclé, caractérisé en ce que le volet de réglage (26) est propre à prendre une position de fermeture complète de l'entrée d'air extérieur (16) et en ce que l'entrée d'air recyclé (18) est équipée d'une grille (30) munie de clapets (54) sensibles à la différence de pression, de sorte que ces clapets s'ouvrent lorsque la pression d'air du côté du boîtier est inférieure à la pression d'air du côté de l'habitacle et lorsque le volet de réglage (26) est en position de fermeture complète.

2. Dispositif selon la revendication 1, caractérisé en ce que la grille (30) équipant l'entrée d'air recyclé (18) comporte une multiplicité de clapets (54) constitués chacun d'une lame souple possédant un bord (56) fixé à la grille et un bord libre opposé (58) rappelé élastiquement vers un premier appui (60) définissant une position de fermeture et susceptible de se déplacer vers un second appui (62) définissant une position d'ouverture.

3. Dispositif selon la revendication 2, caractérisé en ce que, dans la position d'ouverture, chaque clapet (54) est dirigé vers l'intérieur du boîtier (10).

4. Dispositif selon l'une des revendications 2 et 3, caractérisé en ce que chaque clapet (54) est formé d'une lame souple en élastomère armé.

5. Dispositif selon l'une des revendications 1 à 4, caractérisé en ce que le volet de réglage (26) est un volet pivotant déplaçable entre une position de pleine ouverture et une position de pleine fermeture par rotation d'environ 1/4 de tour.

6. Dispositif selon l'une des revendications 1 à 5, caractérisé en ce qu'il comprend des moyens de commande (66) agissant sur le déplacement du volet de réglage (26), une première entrée (74) pour un signal représentatif de la vitesse du véhicule, une seconde entrée (76) pour un signal de consigne de recyclage, des moyens de traitement (78) propres à recevoir le signal issu de la première entrée (74) ou le signal issu de la seconde entrée (76) et à émettre un signal de sortie appliqué aux moyens de commande (66), de telle sorte que le signal de sortie soit fonction de la vitesse du véhicule dans le cas où la seconde entrée (76) ne reçoit pas de signal de consigne et que le signal de sortie commande le volet en position de fermeture dans le cas où la seconde entrée (76) reçoit un signal de consigne de recyclage.

7. Dispositif selon la revendication 6, caractérisé en ce que les moyens de commande (66) comprennent des moyens d'asservissement linéaire (68,70).

8. Dispositif selon l'une des revendications 1 à 7, caractérisé en ce que le boîtier (10) comprend un premier élément de boîtier (12) muni de l'entrée d'air extérieur (16) et de l'entrée d'air recyclé (18) et un second élément de boîtier (14) relié au premier élément de boîtier (12), cet élément de boîtier (14) étant muni de la sortie d'air (50) et logeant intérieurement le ventilateur (38).

## Claims

1. Ventilating apparatus for the cabin of a motor vehicle, comprising a casing (10) having a fresh air inlet (16), a recycled air inlet (18), and an air outlet (50) exhausting into the cabin (H), a fan (38) mounted within the casing, a regulating flap valve (26) which is governed by the speed of the vehicle so as partially to obturate the fresh air inlet (16), and distribution means for selectively obturating the fresh air inlet and the recycled air inlet, characterised in that the regulating flap valve (26) is adapted to assume a position in which the fresh air inlet (16) is fully closed, and in that the recycled air inlet (18) is equipped with a grid (30) which is provided with valve members (54) responsive to differential pressure, whereby the said valve members open when the air pressure on the same side as the casing is lower than the air pressure on the same side as the cabin and when the regulating flap valve (26) is in its fully closed position.

2. Apparatus according to Claim 1, characterised in that the grid (30) arranged in the recycled air inlet (18) includes a multiplicity of valve members (54), each of which comprises a flexible leaf having one edge (56) secured to the grid, and an opposite free edge (58) which is biased resiliently towards a first seating (60) defining a closed position, and which is arranged to be displaced towards a second seating (62) which defines an open position.

3. Apparatus according to Claim 2, characterised in that in the open position, each valve member (54) is directed towards the interior of the casing (10).

4. Apparatus according to Claim 2 or Claim 3, characterised in that each valve member (54) comprises a flexible leaf of reinforced elastomeric material.

5. Apparatus according to one of Claims 1 to 4, characterised in that the regulating flap valve (26) is a pivoting valve which is displaceable between a fully open position and a fully closed position by rotation through about one quarter of a turn.

6. Apparatus according to one of Claims 1 to 5, characterised in that it includes control means (66) acting on the displacement of the regulating flap valve (26), a first input (74) for a signal representing the speed of the vehicle, a second input (76) for a signal representing a demand for recycled air, and processing means (78) adapted to receive the signal from the first input (74) or the signal from the second input (76), and to emit an output signal which is applied to the control means (66), whereby the output signal is a function of the speed of the vehicle in the case where the second input (76) receives no demand signal, and whereby the output signal causes the flap valve to be put in its closed position in the case where the second input (76) receives a signal representing a demand for recycled air.

7. Apparatus according to Claim 6, characterised in that the control means (66) include linear governing means (68, 70).

8. Apparatus according to one of Claims 1 to 7, characterised in that the casing (10) comprises a first casing element (12) having the fresh air inlet (16) and the recycled air inlet (18), together with a second casing element (14) which is joined to the first casing element (12), the said second casing element (14) having the air outlet (50) and containing the fan (38) within it.

## Patentansprüche

1. Vorrichtung zur Belüftung des Fahrgastraums eines Kraftfahrzeugs, bestehend aus einem Gehäuse (10) mit einem Außenlufteinlaß (16), einem Umlufteinlaß (18) und einem in den Fahrgastraum (H) führenden Luftauslaß (50), einem im Gehäuse angeordneten Lüfter (38), einer durch die Fahrgeschwindigkeit des Fahrzeugs gesteuerten Regelklappe (26), um den Außenlufteinlaß (16) partiell zu verschließen, und Verteilungsmitteln, um wahlweise den Außenlufteinlaß und den Umlufteinlaß zu verschließen , **dadurch gekennzeichnet,** daß die Regelklappe (26) eine Schließposition mit vollständigem Verschluß des Außenlufteinlasses (16) einnehmen kann, und daß der Umlufteinlaß (18) mit einem Gitter (30) versehen ist, das für den Druckunterschied empfindliche Klappen (54) aufweist, so daß sich diese Klappen öffnen, wenn der Luftdruck auf der Gehäuseseite niedriger als der Luftdruck auf der Fahrgastraumseite ausfällt und wenn sich die Regelklappe (26) in der Schließposition mit vollständigem Verschluß befindet.

2. Vorrichtung nach Anspruch 1 , **dadurch gekennzeichnet,** daß das am Umlufteinlaß (18) vorgesehene Gitter (30) eine Mehrzahl von Klappen (54) umfaßt, die jeweils aus einer biegsamen Lamelle bestehen, welche eine am Gitter befestigte Kante (56) und eine gegenüberliegende freie Kante (58) besitzt, die elastisch zu einer ersten Auflage (60), durch die eine Schließposition definiert wird, zurückgeholt wird und die sich zu einer zweiten Auflage (62), durch die eine Öffnungsposition definiert wird, bewegen kann.

3. Vorrichtung nach Anspruch 2 , **dadurch gekennzeichnet,** daß in Öffnungsposition jede Klappe (54) zum Innern des Gehäuses (10) gerichtet ist.

4. Vorrichtung nach einem der Ansprüche 2 und 3, **dadurch gekennzeichnet,** daß jede Klappe (54) durch eine biegsame Lamelle aus verstärktem Elastomer gebildet wird.

5. Vorrichtung nach einem der Ansprüche 1 bis 4, **dadurch gekennzeichnet,** daß es sich bei der Regelklappe (26) um eine Schwenkklappe handelt, die durch Drehen um etwa eine Vierteldrehung zwischen einer ganz geöffneten Position und einer ganz geschlossenen Position verstellbar ist.

6. Vorrichtung nach einem der Ansprüche 1 bis 5, **dadurch gekennzeichnet,** daß sie Betätigungsmittel (66) umfaßt, die auf die Verstellung der Regelklappe (26) einwirken, einen ersten Eingang (74) für ein für die Fahrgeschwindigkeit des Fahrzeugs repräsentatives Signal, einen zweiten Eingang (76) für ein Umluftsollwertsignal und Verarbeitungsmittel (78), die das vom ersten Eingang (74) kommende Signal oder das vom zweiten Eingang (76) kommende Signal empfangen und ein Ausgangssignal abgeben können, das auf die Betätigungsmittel (66) angewendet wird, so daß das Ausgangssignal von der Fahrgeschwindigkeit des Fahrzeugs abhängig ist, wenn der zweite Eingang (76) kein Umluftsollwertsignal empfängt, und daß das Ausgangssignal die Regelklappe in Schließposition betätigt, wenn der zweite Eingang (76) ein Umluftsollwertsignal empfängt.

7. Vorrichtung nach Anspruch 6 , **dadurch gekennzeichnet,** daß die Betätigungsmittel (66) Linearsteuerungsmittel (68, 70) enthalten.

8. Vorrichtung nach einem der Ansprüche 1 bis 7, **dadurch gekennzeichnet,** daß das Gehäuse (10) ein erstes Gehäuseelement (12) mit dem Außenlufteinlaß (16) und dem Umlufteinlaß (18) sowie ein zweites Gehäuseelement (14) umfaßt, das mit dem ersten Gehäuseelement (12) verbunden ist, wobei dieses zweite Gehäuseelement (14) mit dem Luftauslaß (50) versehen ist und in seinem Innern den Lüfter (38) aufnimmt.
